(19) Europäisches Patentamt
European Patent Office
Office européen des brevets

(11) EP 4 675 571 A1

(12) EUROPEAN PATENT APPLICATION

(43) Date of publication:
07.01.2026 Bulletin 2026/02

(21) Application number: 24221190.2

(22) Date of filing: 18.12.2024

(51) International Patent Classification (IPC):
G06V 10/58 (2022.01)    G01N 21/64 (2006.01)
G06T 5/50 (2006.01)

(52) Cooperative Patent Classification (CPC):
G06V 10/58; G01N 21/6458; G06T 5/10;
G06T 5/70; G06T 5/73; G01N 2021/6421;
G01N 2021/6441; G06T 2207/10056;
G06T 2207/10064; G06T 2207/20064;
G06T 2207/30024; G06V 2201/03

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.07.2024 EP 24186888
07.08.2024 EP 24193408

(71) Applicant: Leica Microsystems CMS GmbH
35578 Wetzlar (DE)

(72) Inventors:
• Hecht, Frank
35578 Wetzlar (DE)
• Steinmetz, Irmtraud
35578 Wetzlar (DE)
• Straka, Tatjana
35578 Wetzlar (DE)

(74) Representative: Paustian & Partner
Patentanwälte mbB
Oberanger 32
80331 München (DE)

(54) **METHOD AND DEVICE FOR DETERMINATION OF SPECTRAL INFORMATION OF FLUOROPHORES IN STAINED SAMPLES**

(57)    A first aspect of the present disclosure is related to a determination of spectral information of fluorophores in stained samples,
comprising the steps:
- select a set of fluorophores ;
- preparing a set of samples to comprise one or more fluorophores from the set of fluorophores ;
- acquiring a first image for each of the prepared samples based on excitation of the fluorophores comprised by the respective sample;
- acquiring a second image for each of the prepared samples based on excitation of the fluorophores of all samples and/or of the set of fluorophores ;
- determining spectral information based on the two images for one or more predefined spectral channels .

Fig. 1a

Fig. 1b

**Description**

**Technical Field**

This disclosure is related to methods for determining spectral information of fluorophores in stained samples. Additionally, the disclosure is related to devices and computer programs therefor.

**Background**

Fluorescence imaging allows for the use of multiple fluorescent dye markers to label various targets within a sample. However, spectral overlap between dyes (i.e. fluorophores) is common and can complicate image clarity. One method to address this involves staining a sample in multiple rounds, with each round followed by washing or bleaching the sample to remove residual fluorescence. However, this approach often leaves traces of fluorescence, complicates image alignment between rounds, and demands considerable effort. Alternatively, a single-round imaging technique can capture all dye markers at once, using linear unmixing to manage spectral overlap. Linear unmixing optimizes the signal-to-noise ratio, allowing for clearer differentiation of dyes. Several approaches have been developed to derive the unmixing matrix from fully stained samples, though these techniques can be sensitive to high noise levels and background autofluorescence. Further improvements are desired.

**Summary**

An object of the present disclosure is to improve fluorescence imaging.
This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.
A first aspect of the present disclosure is related to a determination of spectral information of fluorophores in stained samples,
*comprising the steps:*

- *select a set of fluorophores ;*
- *preparing a set of samples to comprise one or more fluorophores from the set of fluorophores ;*
- *acquiring a first image for each of the prepared samples based on excitation of the fluorophores comprised by the respective sample;*
- *acquiring a second image for each of the prepared samples based on excitation of the fluorophores of all samples and/or of the set of fluorophores ;*
- *determining spectral information based on the two images for one or more predefined spectral channels.*

The method can be performed for one or more, in particular all, pixels of the acquired images.
Selecting a set of fluorophores may comprise selecting information about fluorophores excitation and emission characteristics, e.g. by using reference databases. A microscope may come with software that suggests settings for specific fluorophores and may include spectral unmixing tools to handle signal overlap in multiplex imaging. Documentation from fluorophore manufacturers may provide respective information, e.g., spectral data. Additionally or alternatively, fluorophore data can be experimentally obtained. A selection of information about the set of fluorophores can be performed automatically and/or manually.
After a plurality of fluorophores are selected, a set of samples is be prepared based on the selected fluorophores. For a sample some of the selected fluorophores are used; in particular one of the samples is stained with more than one fluorophores from the selected fluorophores. Hence, for each sample a set of fluorophores from the selected subset of fluorophores can be determined. Such a determination can be performed automatically. A sample preparation can be performed automatically and/or manually.
After the set of samples has been prepared, a first image is acquired for each of the prepared samples. The images are captured by an imaging device. An imaging device can be, e.g., a microscope, an endoscope, an exoscope, or a camera. The imaging device can be controlled by a device that is configured to exchange information with an imaging device, such as a network-based control computer. The first images can be captured with one or more excitations optimally exciting the fluorophore(s) with which the respective stained samples are prepared (i.e. its subset of fluorophores). For example, if a sample is stained with fluorophores "SiR 700" and "ALEXA 790" it can be excited with excitations of 700nm and 790nm. Alternatively, it can be excited with a light that comprises both wavelengths.
Additionally to the first image, a second image is acquired for each of the samples. A second image can be captured before or after the first image. In particular some of the second images can be captured before one or more first images and some second images can be captured after one or more of the remaining first images. A pre-defined order is not necessary. The acquisitions of the second images are performed with excitations optimally exciting all of the fluorophores of the set of fluorophores not only with the ones that optimally excite the fluorophores with which the sample is prepared. Hence, the second image is obtained with the same configuration for all samples. For example, if a selected set of fluorophores consists of the fluorophores "ALEXA 405", "ALEXA 488", "SiR700", and ALEXA 790, the imaging device can capture second images with distinct excitations of 405 nm, 488 nm, 700 nm, and 790 nm.

In other words, the first images are captured with excitations that address only the fluorophores that are comprised by the respective image (subset of fluorophores). The second images are captured with the excitations that excite the fluorophores that are comprised in all first images. In particular the second images can be acquired with the same excitation configuration.

The spectral channels can be configured to identify one or more fluorophores from the selected set of fluorophores. In particular all fluorophores from the selected set of fluorophores may be observed by a dedicated spectral channel.

Based on the spectral information from the first images and the second images crosstalk can be filtered out for each of the first images and structures within the images can be made visible more clearly. This can be done, e.g. by a linear unmixing, in which the information of a plurality of images, in particular all images is involved. Based on a method according to the first aspect of this disclosure, a unmixing matrix for a multiplexing experiment can be determined with reduced effort.

In another embodiment of the first aspect a method can be used for determination of an unmixing matrix for unmixing images acquired with multiple dye markers, e.g. by a fluorescence microscope. In a first step, at least two groups of dye markers are selected. In a second step, for each of the two groups a first image with the device setup intended for a multiplex acquisition is acquired. In a third step, a second image with a different device setup is acquired. For each of the groups the corresponding rows in a mixing matrix are calculated, where image intensity data from both images are considered. Finally, the unmixing matrix is determined, based on the mixing matrix.

An embodiment of the first aspect is related to a determination of spectral information of fluorophores in stained samples,

> *wherein the set of fluorophores is selected based on excitations with specific acquisition settings;*
> *and wherein the first images and/or the second images are acquired with the acquisition settings used for selecting the set of fluorophores.*

"Acquisition settings" in the sense of this disclosure can comprise all factors that may influence emission spectra of one or more fluorophores used or prevalent (in case of autofluorescence) in a sample. Acquisition settings can comprise hardware settings/configurations, software settings, sample type, environmental conditions (lighting, humidity, etc.).

In this case, the fluorophores that are used for the partial excitation and/or for the full excitation is taken with the same acquisition settings. Since fluorophore/dye emission spectra may be depending on the hardware and the environmental conditions, such dependencies may be mitigated when working with the same acquisition settings.

An embodiment of the first aspect is related to a determination of spectral information of fluorophores in stained samples,

*comprising the step:*

- *determine spectral information based on the two images for additional pre-defined channels, in particular such that the number of channels equals the number of fluorophores .*

In case the number of detection channels equals the number of fluorophores used in a sample a full unmixing matrix may be determined based on a method according to the first aspect of this disclosure. Based on a plurality of channels, a plurality of structures/functions from the samples can be made visible.

An embodiment of the first aspect is related to a determination of spectral information of fluorophores in stained samples,

*wherein each sample is prepared with a different subset of fluorophores from the obtained set of fluorophores , in particular such that a subset of fluorophores for one sample differs in all fluorophores of a subset of fluorophores for another sample.*

Each partially stained sample is stained with a different subset of fluorophores. Additionally or alternatively, each partially stained samples is stained with the same number of fluorophores, i.e. each subset of fluorophores comprises the same number of fluorophores.

The excitation for each sample may comprise distinct excitations for one or more of the fluorophores used in the respective sample. In case, each sample is stained with different fluorophores, each sample may also be excited with different excitations for the used fluorophores. Distinct and different excitations may be used for each uniquely stained sample (e.g. laser-based excitation at different wavelengths).

The less fluorophores are 're-used' for another of the partially stained samples the more information can be derived from the different samples.

An embodiment of the first aspect is related to a determination of spectral information of fluorophores in stained samples,

*comprising the step:*

*- providing sample information about the set of samples ;*

*and wherein the fluorophores are obtained based on the sample information.*

A set of fluorophores can be selected optimally for the samples to be analyzed, e.g. autofluorescence is minimized.

Furthermore, it can be advantageous that image channels with colocalizing structures have little or no crosstalk. Therefore, the selection of the fluorophores and targets (what is stained) may have either colocalization or crosstalk but not both. Colocalizing structures in a sample may therefore be stained with fluorophores that are very unlikely to generate cross-talk between each other.

An embodiment of the first aspect is related to a determination of spectral information of fluorophores in stained samples,

*wherein the fluorophores for each subset are automatically selected from the selected set of fluorophores such that the spectra of emission responses of the fluorophores of at least one of the subsets spectrally overlap with each other in a predefined way, in particular such that crosstalk is minimized.*

Fluorophore selection for each of the subsets can be done in different ways. For example, fluorophores can be selected in such a way to reduce and/or minimize crosstalk. Additionally or alternatively, fluorophores can be selected such that an unmixing is facilitated. Additionally or alternatively, fluorophores can be selected such that a signal-to-noise ratio for individual and/or all dyes used is improved, in particular maximized. One or more of these goals can be realized for one or more selected, in particular all, subsets individually. Alternatively, one or more of these goals can be realized globally, i.e. for taking all subsets into account.

For example, in case two subsets of fluorophores for two partially stained samples are needed, the subsets can be determined as follows. In a first step, estimated or observed dye responses for the initially selected set of fluorophores are be ordered with respect to (excitation or response) wavelength and/or with respect to their spectral overlap. This yields a list of dyes, wherein the dyes are ordered according to their wavelength and/or according to their spectral overlap. In a second step, two subsets are formed by taking the first and then every second (i.e. 3rd, 5th, etc.) dye from the list to populate the first subset and by taking the second and every further second (i.e. the 4th, 6th, etc.) dye from the list to populate the second subset. This yields two subset with maximized distance between each other. In case of three or more subsets this can be done correspondingly.

An embodiment of the first aspect is related to a determination of spectral information of fluorophores in stained samples,

*wherein the fluorophores of one or more of the subsets are automatically selected from the set of fluorophores such that a sum of the crosstalk between the fluorophores is minimized.*

This can be done for one or more individual subsets, i.e. the minimization of crosstalk is determined with respect to the fluorophores of one or more subsets, in particular with respect to each subset alone. Alternatively, this can be done with respect to a minimization for all subset together. In particular, if there is more than one crosstalk-minimal solution the solution can be selected where the overall crosstalk is minimized.

In a particular implementation form of this embodiment, the used algorithm looks for the pair of fluorophores with maximum crosstalk and assigns them to different samples. Then it looks for the remaining pairs of fluorophores for maximum crosstalk and assign to different samples and so on.

An embodiment of the first aspect is related to a determination of spectral information of fluorophores in stained samples,

*wherein the fluorophores for the selected set or for the different subsets of fluorophores are based on information about previously analyzed fluorophores from a database.*

Such a database can be stored on the device on which the method is performed and/or by which images of the stained samples are captured and/or by which the samples are stained. Hence, the emission responses for crosstalk analysis can be provided by a 'virtual fridge'.

Sometimes, emission responses (e.g. spectra) may be dependent on specific acquisition settings, e.g. a specific hardware setup. Therefore, the database may provide information on hardware-specific responses.

Additionally or alternatively, information on emission responses provided by a database may be further adjusted to account for a specific hardware setup. For example, if it is known that a specific setup (including the sample), causes a larger Stoke's shift (i.e. a shift between excitation and emission) than represented by the spectra of the database, then the database spectra may be manually or automatically adjusted.

Additionally or alternatively, a database can comprise information about colocalization, which might be in particular determined in a step which may be conducted in the course of a method according to the first aspect of this embodiment. When dyes colocalize the fluorescent emission signal of both dyes is detected in one and the same pixel. When in addition, both dyes are detected with crosstalk it may not be possible anymore to tell if a signal in the pixel is caused by colocalization or crosstalk. A software with corresponding knowledge about the typical colocalization of the targets in typical samples can help to avoid that dyes are selected which result both, colocalization or crosstalk at the same time.

An embodiment of the first aspect is related to a determination of spectral information of fluorophores in stained samples,

*comprising the step:*

- *obtaining one or more operational settings, in particular hardware settings, related to one or more of the fluorophores ;*

*and wherein the image acquisition is executed based on the one or more operational settings.*

This information can in particular be provided by a database ("virtual fridge"). In particular each fluorophore stored in a database can comprise information on operational settings, such as the hardware settings, environmental information and/or sample information, with which the fluorophore emission characteristics were obtained. Additionally or alternatively, a plurality of operational settings can be stored together with fluorophores (with emission characteristics) that were used in connection with a specific operational setting.

An embodiment of the first aspect is related to a determination of spectral information of fluorophores in stained samples,

*comprising the steps:*

- *receiving an information over a user interface for one or more of the sets of fluorophores ;*
- *adapting the one or more sets of fluorophores based on the received information;*

*and wherein the image acquisition is executed based on the one or more adapted sets of fluorophores.*

A user can delete a fluorophore from an automatically determined set or subset. Additionally or alternatively, a user can add certain fluorophores to the set of fluorophores and or to a subset. Thereby, a user can add additional knowledge, in particular for certain targets.

An embodiment of the first aspect is related to a determination of spectral information of fluorophores in stained samples,

*comprising the step:*

- *obtaining user information about an excitation of one or more fluorophores of the set of fluorophores ;*

*and wherein the image acquisition is executed based on the user information.*

User information can be related to an excitation in time- or frequency domain. In particular user information can be used to add further information to an automatically determined set or subsets of fluorophores. Thereby, the method according to the first aspect of this disclosure can be fine-tuned, in particular excitation signals can be fine-tuned to reduce crosstalk.

An embodiment of the first aspect is related to a determination of spectral information of fluorophores in stained samples,
*comprising the steps:*

- *identifying a region in one of the following:*

     *- in one or more of the samples;*
     *-- as one of the prepared samples of a single specimen;*

- *acquiring the images in the pre-defined region of the one or more samples.*

In particular an automatic identification may be performed of one or more regions within a single sample/specimen that are stained with the fluorophores assigned to each sample. In this case the "set of samples" is related to different regions of a specimen that are sampled. From a region/sample images can be captured that are used for the method according to the first aspect of this disclosure. One of the images ("first image") taken from a specific region/sample is captured with excitations for the fluorophores with which this region/sample is stained and another image ("second image") is captured with excitations for all fluorophores selected for the analysis. A region can be in particular be identified based on the dyes in a subset of fluorophores. For example, if a subset contains three dyes, a region can be identified as a part of a sample thar contains all of the three dyes.

An embodiment of the first aspect is related to a determination of spectral information of fluorophores in stained samples,

*wherein a mixing matrix is determined by an optimization of intensity differences between the first images and the second images .*

An optimization can in particular be a least squares fit. Based on the determined mixing matrix, the unmixing matrix can then be determined by inversion or pseudoinversion.

An embodiment of the first aspect is related to a determination of spectral information of fluorophores in stained samples,

*determining the step:*

- *judging a quality of a combination of two or more fluorophores for an experiment with unmixing based on the determined spectral information.*

A judgement can in particular be based on an unmixing matrix. The unmixing matrix may have been determined beforehand based on the spectral information about the different fluorophores.

A second aspect of the present disclosure is related to a device for determination of spectral information of fluorophores in stained samples,

*configured to:*

- *obtain a set of fluorophores ;*
- *obtain information about a set of samples each comprising a subset of fluorophores from the set of fluorophores ;*
- *instruct an acquisition of a first image for each of the prepared samples based on excitation of the fluorophores comprised by the respective sample;*
- *instruct an acquisition of a second image for each of the prepared samples based on excitation of the fluorophores of all samples used in all prepared samples;*
- *determine spectral information based on the two images for a predefined spectral channel.*

A device according to the second aspect can in particular comprise any step and/or function described in the context of the first aspect of this disclosure. In particular, the device can be an imaging device such as a microscope, an exoscope, or an endoscope. Additionally or alternatively, the device can be a device that communicates with one or more imaging devices, in particular a network-based device. The device can be configured to execute a method according to the first aspect of this disclosure.

A further aspect of the present disclosure is related to a computing device comprising a processor configured to carry out the method according to any one of the preceding aspects/embodiments.

A further process of the present disclosure is related to a computer program product comprising instructions which, when the program is executed by a computer system, cause the computer system to carry out the method according to any one of the preceding aspects/embodiments.

A further aspect of the present disclosure is related to a computer-readable medium comprising instructions which, when executed by a computer system, cause the computer system to carry out the method according to any one of the preceding aspects/embodiments.

## Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.

Fig. 1 a and 1b illustrate a first part of a method according to an embodiment of this disclosure.

Fig. 2a and 2b illustrate a second part of a method according to an embodiment of this disclosure.

Fig. 3 illustrates a third part of a method according to an embodiment of this disclosure.

Fig. 4 illustrates a fourth part of a method according to an embodiment of this disclosure.

Fig. 5 illustrates a microscope system according to and/or for embodiments of this disclosure.

Although some aspects have been described in the context of an apparatus (or a system) in the present disclosure, the description of these aspects also represents a description of the corresponding method, where a block or device corresponds to a method step or a feature of a method step.

Analogously, aspects described in the context of a method step also represent a description of a corresponding block, item, or feature of a corresponding apparatus or of a system that may in particular be distributed over different locations and is configured to exchange information between the different locations with respective communication means.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

As used herein the term "and/or" includes any and all combinations of one or more of the associated listed items and may be abbreviated as "/". Expressions as, "for example", "e.g.", or "in particular" denote facultative or optional features that can be combined with all other (mandatory, facultative, or optional) features of the aspects or embodiments of this disclosure, until explicitly stated otherwise.

In the following description reference is made to the accompanying figures which form part of the disclosure, and which illustrate specific aspects in which the present disclosure can be understood. Identical reference signs refer to identical or at least functionally or structurally similar features.

**Detailed description**

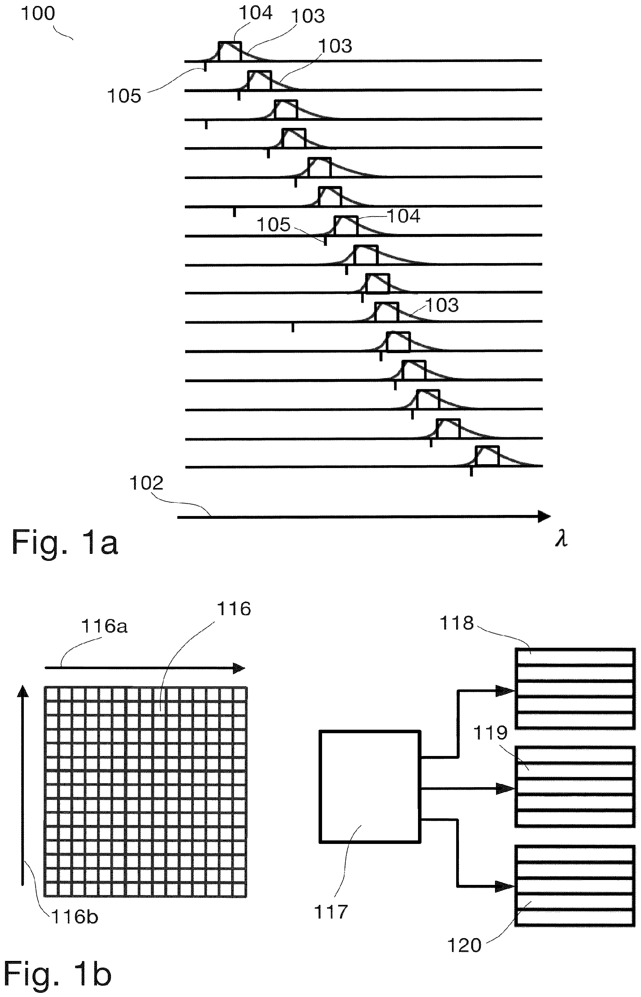

Fig. 1a and Fig. 1b show the emission spectra of 15 dyes used in an example experiment and the process to select three groups with the aid of a crosstalk matrix. The groups are shown for the example. Each group corresponds to a partially stained sample to prepare.

The method according to the following embodiment can be applied to multiplexing experiments with a fluorescence microscope in general. Confocal and Multiphoton microscopes are well suited for the acquisition of many markers in one staining round due to the spectral flexibility of these devices. Other types of fluorescence microscopes e.g. widefield, light sheet and spinning disk microscopes can also be used when the device is flexible enough regarding emission wavelength selection and spectral bands.

A fluorescence microscope, capable of acquiring images for multiplexing experiments may have means to change one or multiple excitation wavelength lines and/or bands and may have means to change one or multiple emission wavelength bands. In a full sequential acquisition only one image channel is acquired with one excitation wavelength line and one emission wavelength band at a time. Excitation wavelength line and/or one emission wavelength are changed, and the next channel is acquired, and so on.

In a partial sequential acquisition several emission wavelength bands can be acquired at a time. One emission wavelength band corresponds to one image channel. In a simultaneous acquisition all emission wavelength bands can be acquired at the same time.

The method contains several steps where a device setup is determined. A device setup includes the sequence in which excitation wavelength lines or bands and emission wavelength bands are recorded. Data for emission and excitation spectra may be available as aid for the user and/or an algorithm to determine a device setup. The spectral data can be obtained from a spectra library and/or database. A device setup can be determined by an algorithm, usually using library spectra and/or by the user. A user can optimize a device setup, determined by an algorithm manually, in particular after an acquisition of one or more example images.

A device setup can be optimized for the case that unmixing is used and/or for the case that unmixing is not used. When unmixing is used the signal to noise ratio after unmixing is optimized, i.e. maximized. An example for an algorithm is US7304733B2. When unmixing is not used the crosstalk is minimized. An example for an algorithm is US6300639B1.

The method is described in the following for an example experiment with 15 dye markers. This is only an example, and the method can be applied to many other cases. The number of single stained samples selected here is 3, wherein each sample is stained with 5 markers each. The number of samples can be different for other cases. The number of markers can be different for other cases and can be different for the individual samples. Here, a confocal microscope with full flexible selection of excitation wavelengths and emission bands is assumed. When a different device type is used, the corresponding hardware components to achieve a device setup effect can be different but the method can still be applied.

Fig. 1a shows a multi-graph 100 with emission spectra 103 of each of the 15 dyes used in the described method. The horizontal axis 102 points to ascending wavelength. Vertical axes for the single dyes are not provided, but each dye is shown with their intensity 103 over the wavelength. Each of the dyes are excited at different wavelengths 105 and their maximum is detected, which leads to a detection in different emission bands 104 for the different dyes 103. In particular, the excitation of the different dyes may be performed with a different timing (e.g. timely shifted) such that each emission signal can be recorded crosstalk-free.

Fig. 1b illustrates how, based in the 15 dyes, 3 groups of dyes are selected. Each group may correspond to a partial stained sample to prepare and to an image later. In particular many combinations of the 15 dyes can be imaged near crosstalk-free. Now a number of groups of dyes are selected such that partially stained samples (each sample is stained with dyes of one group) that can be imaged near crosstalk free.

One possible method to determine the group, starts with the determination of an optimal device setup for the case that unmixing is not used. The criterium to optimize is preferably minimal crosstalk. The device setup to determine is preferably a full sequential setup, when the device supports it. This setup is only a simulation and never used for actual imaging. Note that the multiplex experiment usually covers a large sample volume, but the partial stained samples can be imaged in small regions. Sequential imaging of the partial stained samples can better reflect the goals to image near crosstalk-free and should be preferred.

In the next step a crosstalk matrix 106 is assembled, in particular from the device configuration and/or based on the 15 dyes. The rows 116a correspond to signal 103 from the dyes. The columns 116b correspond to detection channels 104. The signal integral for the detection band of the channel caused by the dye is inserted into the matrix elements 116. Based on the crosstalk matrix 116 and for all possible combination of dyes for a user specified number of groups, the combination is selected where the maximum crosstalk is minimal. This can be done by the device and/or a computer program 117 run by the device. The determined combinations correspond to the 3 different groups 118, 119, 120. If there is more than one solution, then the solution where the sum of the crosstalk is minimal may be selected. Other algorithms and strategies are possible to find groups based on the crosstalk matrix.

Based on each of the groups 118 - 120 a sample is finally prepared with the dyes specified in the respective group.

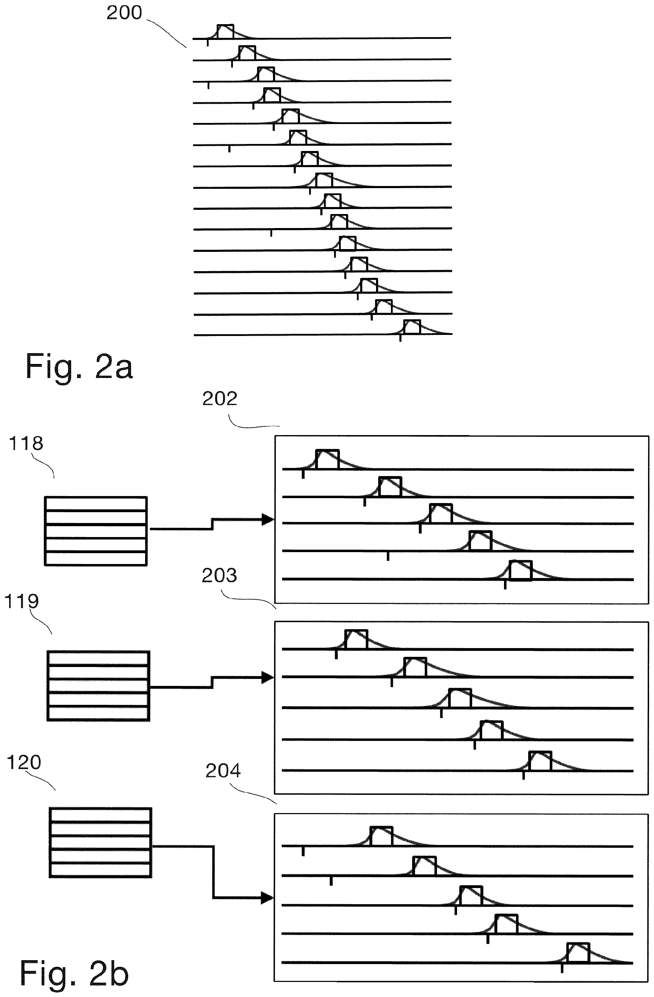

Fig. 2a and Fig. 2b show the device settings used to acquire the images from the partial stained samples.

Fig. 2a shows the device setup 200 for the multiplexing experiment, called "multiplex setup" in the following. The multiplex setups is configured to excite all 15 dyes 100 from which the different dye groups 118 - 120 are sourced from.

Here the setup should be optimized for the case that unmixing is used, i.e. the SNR may be maximized after unmixing. The setup 200 can be determined by an algorithm and/or can be a manually optimized setup using a full stained sample. The setup 200 may be determined by an algorithm. Furthermore, an automatically be determined setup 200 may be a starting point for a manual optimization by the user, in particular since there may be deviations between the library spectra and the real spectra in an actual hardware setting for a sample.

Fig. 2b illustrates a setup 202, 203, 204 for each of the partial stained samples determined for the case that no unmixing is used. Here the goal may be to acquire near crosstalk-free images. For example, for all possible laser wavelengths and all possible detection bands a laser wavelength is selected and a detection band where the ratio of signal to crosstalk is a maximum.

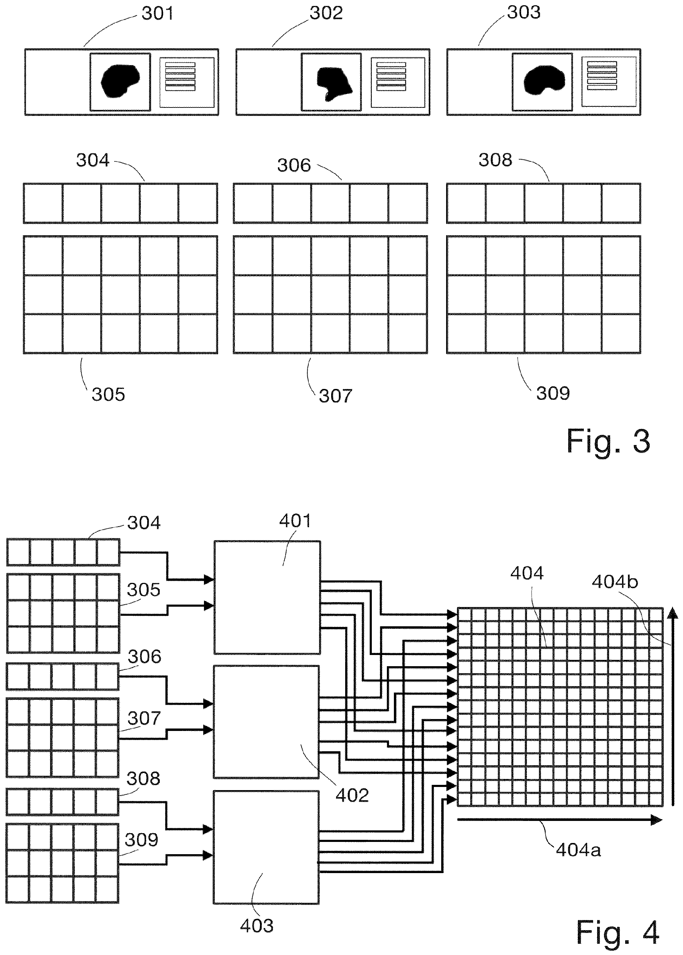

Fig. 3 shows at the top the subfigures representing information about the 3 prepared partially stained samples 301, 302 and 303. The black area represents the partially stained samples. This can be at different location of a single, larger sample. The table at the right side of each subfigure represents the 5 dyes from the subsets of the selected set of dyes.

For each sample two images are acquired for the same sample region. The first partially stained sample 301 is observed with the setup 202 to obtain a near crosstalk-free image 304. Additionally, the first sample is observed with the multiplex setup 200 to obtain a fully excited image 305.

The second sample 302 is observed with the setup 203 to obtain near crosstalk-free image 306. Additionally, the second sample is observed with the multiplex setup 200 to obtain a fully excited image 307.

The third sample 303 is observed with the setup 204 to obtain near crosstalk-free image 308. Additionally, the third sample is observed with the multiplex setup 200 to obtain a fully excited image 309.

Fig. 4 shows the process to determine the unmixing matrix 404 from the partial stained samples.

Each dye marker corresponds to a row 404b in the unmixing matrix 404. Each channel corresponds to a column 404a channel in the unmixing matrix 404. For each sample five rows of the unmixing are calculated by the calculation blocks 401, 402 and 403. The first calculation block 401 takes the near crosstalk-free image 304 and the image 305, generated with the multiplex setup, and calculates the unmixing matrix coefficients of five rows. The other calculation blocks operate similar for the images from the other samples. In particular, the calculation is done for one, more, or all pixel of the images. In the example shown in Fig. 4 the dyes with number 1, 4, 6, 10 and 12 have been chosen in the group selection step for the first sample and the corresponding rows of the unmixing matrix are calculated.

In the described embodiment linear unmixing can be used in the multiplex experiment. The vector with the intensities of the acquired image channels is denoted by A with index c for the image channel and the number of channel C. The vector R is the unmixing result with dye marker index d and the number of dyes D:

$$A = \begin{pmatrix} A_1 \\ \vdots \\ A_C \end{pmatrix}, \ R = \begin{pmatrix} R_1 \\ \vdots \\ R_D \end{pmatrix}, \quad M = \begin{pmatrix} M_{1,1} & \cdots & M_{1,C} \\ \vdots & \ddots & \vdots \\ M_{D,1} & \cdots & M_{D,C} \end{pmatrix}, \quad U = \begin{pmatrix} U_{1,1} & \cdots & U_{1,D} \\ \vdots & \ddots & \vdots \\ U_{C,1} & \cdots & U_{C,D} \end{pmatrix}.$$

During acquisition the signals form the dyes are mixed. The mixing matrix M translates the signal form the dyes R to the detected signal A for each image pixel p with the number of pixels P:

$$A_{c,p} = \sum_{d=1}^{D} M_{c,d} \cdot R_{d,p.}$$

Linear unmixing back-transforms the acquired intensity with the unmixing matrix U. U is the transposed inverse matrix of the mixing matrix:

$$U = M^{-1^T}.$$

A function t translates the channels of the setup of partial stained samples to channels of the multiplex setup and a function T provides the number of dyes used for partial staining:

$$d = t(s, l), \ T(s),$$

where s is the number of the partial stained sample, l is the number of the channel in the setup of the partial stained sample and d is the number of the channel in the multiplex setup.

In an embodiment according to Fig. 4 the translation functions T and t can be:

$$t(s,l) = \begin{cases} 1, for\ s = 1\ and\ l = 1\ (matrix\ row\ 1\ from\ sample\ 1, channel\ 1) \\ 2, for\ s = 2\ and\ l = 1\ (matrix\ row\ 2\ from\ sample\ 2, channel\ 1) \\ 3, for\ s = 3\ and\ l = 1\ (matrix\ row\ 3\ from\ sample\ 3, channel\ 1) \\ 4, for\ s = 1\ and\ l = 2\ (matrix\ row\ 4\ from\ sample\ 1, channel\ 2) \\ 5, for\ s = 2\ and\ l = 2\ (matrix\ row\ 5\ from\ sample\ 2, channel\ 2) \\ 6, for\ s = 1\ and\ l = 3\ (matrix\ row\ 6\ from\ sample\ 1, channel\ 3) \\ 7, for\ s = 2\ and\ l = 3\ (matrix\ row\ 7\ from\ sample\ 2, channel\ 3) \\ 8, for\ s = 3\ and\ l = 2\ (matrix\ row\ 8\ from\ sample\ 3, channel\ 2) \\ 9, for\ s = 3\ and\ l = 3\ (matrix\ row\ 9\ from\ sample\ 3, channel\ 3) \\ 10, for\ s = 1\ and\ l = 4\ (matrix\ row\ 10\ from\ sample\ 1, channel\ 4) \\ 11, for\ s = 2\ and\ l = 4\ (matrix\ row\ 11\ from\ sample\ 2, channel\ 4) \\ 12, for\ s = 1\ and\ l = 5\ (matrix\ row\ 12\ from\ sample\ 1, channel\ 5) \\ 13, for\ s = 2\ and\ l = 5\ (matrix\ row\ 13\ from\ sample\ 2, channel\ 5) \\ 14, for\ s = 3\ and\ l = 4\ (matrix\ row\ 14\ from\ sample\ 3, channel\ 4) \\ 15, for\ s = 3\ and\ l = 5\ (matrix\ row\ 15\ from\ sample\ 3, channel\ 5) \end{cases} ,$$

$$T(s) = \begin{cases} 5, for \ s = 1 \ (5 \ channels \ in \ sample \ 1) \\ 5, for \ s = 2 \ (5 \ channels \ in \ sample \ 2). \\ 5, for \ s = 3 \ (5 \ channels \ in \ sample \ 3) \end{cases}$$

The intensities of the image acquired with the partial stained setup are denoted by a vector G for each pixel p and the intensities of the image acquired with the multiplex setup are denoted by a vector F:

$$\boldsymbol{G}_{s,l,p} = \begin{pmatrix} G_{s,1,p} \\ \vdots \\ G_{s,L(s),p} \end{pmatrix}, \quad \boldsymbol{F}_{s,l,p} = \begin{pmatrix} F_{s,c,p} \\ \vdots \\ F_{s,c,p} \end{pmatrix}.$$

The coefficients of the matrix can be calculated by a least square fit. An aim may be to minimize the sum of squares of the differences between the mixed near crosstalk free image channel G and the intensity recorded with the multiplex setup F:

$$\sum_{p=1}^{P} \left( \sum_{l=1}^{L(s)} M_{t(s,l),c,p} \cdot G_{s,l,p} - F_{s,c,p} \right)^2 \to min.$$

This fit may be performed for each channel c of the mixing matrix separately. Following the least square fit methodology leads to the linear equation system:

$$\begin{pmatrix} \sum_{p=1}^{P} G_{s,1,p} \cdot G_{s,1,p} & \cdots & \sum_{p=1}^{P} G_{s,1,p} \cdot G_{s,L(s),p} \\ \vdots & \ddots & \vdots \\ \sum_{p=1}^{P} G_{s,L(s),p} \cdot G_{s,1,p} & \cdots & \sum_{p=1}^{P} G_{s,L(s),p} \cdot G_{s,L(s),p} \end{pmatrix} \begin{pmatrix} M_{t(s,1),c,p} \\ \vdots \\ M_{t(s,L(s)),c,p} \end{pmatrix} = \begin{pmatrix} \sum_{p=1}^{P} F_{s,c,p} \cdot G_{s,1,p} \\ \vdots \\ \sum_{p=1}^{P} F_{s,c,p} \cdot G_{s,L(s),p} \end{pmatrix}.$$

The unmixing matrix is then calculated as the inverted transposed matrix of the mixing matrix (as described above).

Some embodiments relate to a microscope comprising a system as described in connection with one or more of the Figs. 1 to 4. Alternatively, a microscope may be part of or connected to a system as described in connection with one or more of the Figs. 1 to 4.

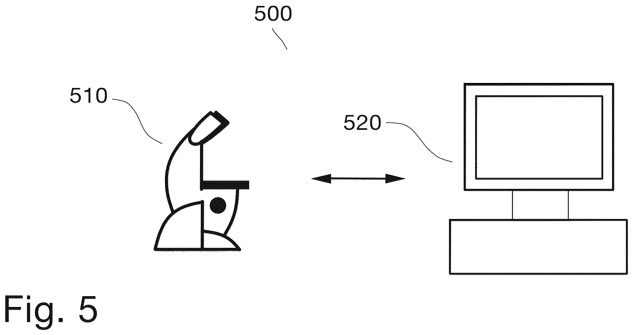

Fig. 5 shows a schematic illustration of a system 500 configured to perform a method described herein. The system 500 comprises a microscope 510 and a computer system 520. The microscope 510 is configured to take images and is connected to the computer system 520. The computer system 520 is configured to execute at least a part of a method described herein. The computer system 520 may be configured to execute a machine learning algorithm. The computer system 520 and microscope 510 may be separate entities but can also be integrated together in one common housing. The computer system 520 may be part of a central processing system of the microscope 510 and/or the computer system 520 may be part of a subcomponent of the microscope 510, such as a sensor, an actor, a camera or an illumination unit, etc. of the microscope 510.

The computer system 520 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 520 may comprise any circuit or combination of circuits. In one embodiment, the computer system 520 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit.

Other types of circuits that may be included in the computer system 520 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 520 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 520 may also include a display device, one or more speakers, and a keyboard and/or controller, which can include a mouse, trackball, touch screen, voice-recognition device, or any other device that permits a system user to input information into and receive information from the computer system 520.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

# EP 4 675 571 A1

**List of reference signs**

| | |
|---|---|
| 100 | multigraph with available dyes |
| 102 | wavelengths axes |
| 103 | dye emission spectrum |
| 104 | detection band |
| 105 | dye excitation |
| 106 | crosstalk matrix |
| 116 | crosstalk matrix |
| 116a | dye signal |
| 116b | detection channel |
| 117 | group identification |
| 118 | group 1 |
| 119 | group 2 |
| 120 | group 3 |
| 200 | full excitation set up |
| 202 | partial staining excitation setup 1 |
| 203 | partial staining excitation setup 2 |
| 204 | partial staining excitation setup 3 |
| 301 | first partially stained sample |
| 302 | second partially stained sample |
| 303 | third partially stained sample |
| 304 | partially excited image of first sample |
| 305 | fully excited first image |
| 306 | partially excited image of second sample |
| 307 | fully excited second image |
| 308 | partially excited image of third sample |
| 309 | fully excited third image |
| 401 | calculation |
| 402 | calculation |
| 403 | calculation |
| 404 | unmixing matrix |
| 404a | detection |
| 404b | dye marker |
| 500 | microscope system |
| 510 | microscope |
| 520 | computer system |

**Claims**

1. A method for determination of spectral information of fluorophores in stained samples, comprising the steps:

   - select a set of fluorophores (100, 200);
   - preparing a set of samples (301, 302, 303) to comprise one or more fluorophores (202, 203, 204) from the set of fluorophores (200);
   - acquiring a first image (304, 306; 308) for each of the prepared samples based on excitation of the fluorophores comprised by the respective sample;
   - acquiring a second image (305, 307; 309) for each of the prepared samples based on excitation of the fluorophores of all samples and/or of the set of fluorophores (100, 200);
   - determining spectral information (404) based on the two images (304, 305; 306, 307; 308, 309) for one or more predefined spectral channels (104).

2. The method according to the preceding claim,

   wherein the set of fluorophores (100) is selected based on excitations with specific acquisition settings;

and wherein the first images (305, 306, 308) and/or the second images (305, 307, 309) are acquired with the acquisition settings used for selecting the set of fluorophores.

3. The method according to one of the preceding claims,
comprising the step:

   - determine spectral information based on the two images for additional pre-defined channels, in particular such that the number of channels equals the number of fluorophores (404).

4. The method according to one of the preceding claims,
wherein each sample (301, 302, 303) is prepared with a different subset (202, 203, 204) of fluorophores from the obtained set of fluorophores (200), in particular such that a subset of fluorophores for one sample differs in all fluorophores of a subset of fluorophores for another sample.

5. The method according to one of the preceding claims,

   comprising the step:

   - providing sample information about the set of samples (301, 302, 303);

   and wherein the fluorophores (200) are obtained based on the sample information.

6. The method according to one of the preceding claims,
wherein the fluorophores for each subset (202, 203, 204) are automatically selected from the selected set of fluorophores (100) such that the spectra of emission responses of the fluorophores of at least one of the subsets spectrally overlap with each other in a pre-defined way, in particular such that crosstalk is minimized.

7. The method according to one of the preceding claims,
wherein the fluorophores of one or more of the subsets (202, 203, 204) are automatically selected from the set of fluorophores (100) such that a sum of the crosstalk between the fluorophores is minimized.

8. The method according to one of the preceding claims,
wherein the fluorophores for the selected set or for the different subsets of fluorophores (200, 202, 203, 204) are based on information about previously analyzed fluorophores from a database.

9. The method according to one of the preceding claims,

   comprising the step:

   - obtaining one or more operational settings, in particular hardware settings, related to one or more of the fluorophores (200);

   and wherein the image acquisition is executed based on the one or more operational settings.

10. The method according to one of the preceding claims,

   comprising the steps:

   - receiving an information over a user interface for one or more of the sets of fluorophores (100, 200, 202, 203, 204);
   - adapting the one or more sets of fluorophores based on the received information;

   and wherein the image acquisition is executed based on the one or more adapted sets of fluorophores.

11. The method according to one of the preceding claims,

   comprising the step:

- obtaining user information about an excitation of one or more fluorophores of the set of fluorophores (100, 200);

and wherein the image acquisition is executed based on the user information.

12. The method according to one of the preceding claims,
comprising the steps:

- identifying a region in one of the following:

-- in one or more of the samples;
-- as one of the prepared samples of a single specimen;

- acquiring the images in the pre-defined region of the one or more samples.

13. The method according to one of the preceding claims,
wherein a mixing matrix is determined by an optimization of intensity differences between the first images (304, 306, 308) and the second images (305, 307, 309).

14. The method according to one of the preceding claims,
determining the step:

- judging a quality of a combination of two or more fluorophores for an experiment with unmixing based on the determined spectral information.

15. A device for determination of spectral information of fluorophores in stained samples,
configured to:

- obtain a set of fluorophores (100, 200);
- obtain information about a set of samples (301, 302, 303) each comprising a subset of fluorophores (202, 203, 204) from the set of fluorophores (100, 200);
- instruct an acquisition of a first image (304, 306; 308) for each of the prepared samples based on excitation of the fluorophores comprised by the respective sample;
- instruct an acquisition of a second image (305, 307; 309) for each of the prepared samples based on excitation of the fluorophores of all samples used in all prepared samples;
- determine spectral information (404) based on the two images (304, 305; 306, 307; 308, 309) for a predefined spectral channel (104).

Fig. 1a

Fig. 1b

Fig. 2a

Fig. 2b

301  302  303

304  306  308

305  307  309

## Fig. 3

304  401  404  404b

305

306

307  402

308

309  403  404a

## Fig. 4

500

510

520

Fig. 5

EUROPEAN SEARCH REPORT

**Application Number**

EP 24 22 1190

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Zimmermann Timo ET AL: "Clearing Up the Signal: Spectral Imaging and Linear Unmixing in Fluorescence Microscopy : Methods and Protocols"<br>In: "Confocal Microscopy : Methods and Protocols : Methods and Protocols",<br>24 August 2013 (2013-08-24), Springer New York, XP093268856,<br>ISSN: 1064-3745<br>ISBN: 978-1-60761-847-8<br>vol. 1075, pages 129-148, DOI: 10.1007/978-1-60761-847-8_5,<br>Retrieved from the Internet:<br>URL:https://d1wqtxts1xzle7.cloudfront.net/88282303/Spectral-paper-libre.pdf?1657038702=&response-content-disposition=inline;+filename=Clearing_Up_the_Signal_Spectral_Imaging.pdf&Expires=1744215837&Signature=XzgHgyUdchZvfY~-OVphHkbzD7g3j9S7zE4zs6cEFyAQ0uN4TbQfXo6zp98iCAVI9k4cugewsFIUJCmghyI-4UwSrQBetnw-o><br>* the whole document *<br>----- | 1-15 | INV.<br>G06V10/58<br>G01N21/64<br>G06T5/50 |
| A | Anonymous: "Leica TCS SP5 Leica TCS SP5 X",<br>,<br>1 January 2011 (2011-01-01), pages 1-132, XP093269094,<br>Retrieved from the Internet:<br>URL:https://www.zmbh.uni-heidelberg.de/Central_Services/Imaging_Facility/info/SP5.pdf<br>* In particular sub-section 10.3 on pages 103-106;<br>page 81 - page 106 *<br>----- | 9-11 | TECHNICAL FIELDS SEARCHED (IPC)<br><br>G06V<br>G01N<br>G06T |
| | -/-- | | |

The present search report has been drawn up for all claims

| Place of search | Date of completion of the search | Examiner |
|---|---|---|
| The Hague | 14 April 2025 | Neubüser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 22 1190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DICKINSON M.E. ET AL: "Multi-Spectral Imaging and Linear Unmixing Add a Whole New Dimension to Laser Scanning Fluorescence Microscopy", BIOTECHNIQUES, vol. 31, no. 6, 1 December 2001 (2001-12-01), pages 1272-1278, XP093269959, US ISSN: 0736-6205, DOI: 10.2144/01316bt01 Retrieved from the Internet: URL:https://www.tandfonline.com/doi/pdf/10.2144/01316bt01> * * the whole document * Note: cited in Zimmermann et al.; Guidelines G-IV, 8 apply * | 1-15 | |

-----

TECHNICAL FIELDS
SEARCHED      (IPC)

The present search report has been drawn up for all claims

| Place of search | Date of completion of the search | Examiner |
|---|---|---|
| The Hague | 14 April 2025 | Neubüser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7304733 B2

- US 6300639 B1